# EUROPÄISCHE PATENTSCHRIFT

(11) **EP 3 751 125 B1**
(45) Veröffentlichungstag und Bekanntmachung des Hinweises auf die Patenterteilung: **09.08.2023**
(21) Anmeldenummer: 20179401.3
(22) Anmeldetag: 11.06.2020
(51) Int. Cl.: F02G 5/02, G01H 1/00, G01M 13/045, F02G 5/04, F02G 1/04

(54) **ABGASWÄRMERÜCKGEWINNUNGSSYSTEM UND ABGASANLAGE**
EXHAUST HEAT RECOVERY SYSTEM AND EXHAUST SYSTEM
SYSTÈME DE RÉCUPÉRATION DE CHALEUR DE GAZ D'ÉCHAPPEMENT ET SYSTÈME D'ÉCHAPPEMENT

(30) Priorität: 12.06.2019 DE 102019115911
(43) Veröffentlichungstag der Anmeldung: 16.12.2020
(73) Patentinhaber: VOLKSWAGEN AG, 38440 Wolfsburg (DE)
(72) Erfinder: Horn, André, 38104 Braunschweig (DE); Carstensen, Asmus, 38557 Osloß (DE); Semke, Artur, 38446 Wolfsburg (DE); Maischik, Thomas, 38173 Sickte (DE); Schulenburg, Thomas, 38550 Isenbüttel (DE)
(74) Vertreter: Gulde & Partner

(56) Entgegenhaltungen:
- EP-A1- 1 049 863
- DE-A1-102010 052 508
- DE-A1-102012 204 086
- DE-A1-102015 016 759
- DE-A1-102016 107 458
- DE-A1-102017 200 964
- KR-A- 20120 013 547
- US-A1- 2005 229 595

## Beschreibung

Die Erfindung betrifft eine Abgaswärmerückgewinnungssystem für einen Verbrennungsmotor, eine Abgasanlage mit einem solchen Abgaswärmerückgewinnungssystem sowie ein Verfahren zum Betreiben eines solchen Abgaswärmerückgewinnungssystems.

Bei der Entwicklung von Kraftfahrzeugen mit Verbrennungsmotor wird stets nach weiteren Potentialen gesucht, um den Kraftstoffverbrauch zu minimieren und den Wirkungsgrad zu erhöhen. Da bei konventionellen Verbrennungsmotoren ein signifikanter Anteil der Energie ungenutzt über das Abgas in die Umwelt emittiert wird, sind bei Verbrennungsmotoren Systeme zur Abgaswärmerückgewinnung bekannt, mit denen die im Abgasstrom enthaltene Energie zumindest anteilig nutzbar gemacht werden kann. Dazu ist in der Abgasanlage des Verbrennungsmotors ein Wärmetauscher vorgesehen, über welchen die Abwärme des Verbrennungsmotors auf einen Dampfkreislauf übertragen wird, wobei der Dampfkreislauf eine Turbine antreibt, über welche diese Energie als mechanische Antriebsleistung und/oder elektrische Energie nutzbar gemacht wird. Ein System zur Abgaswärmerückgewinnung umfasst in der Regel vier Hauptkomponenten: eine Pumpe, einen Expander, einen Expander und einen Kondensator. Der Kondensator des Abgaswärmerückgewinnungssystems wird in der Regel von Kühlwasser zur Kühlung des Verbrennungsmotors durchströmt. In dem Kondensator wird das Arbeitsmedium des Dampfkreislaufs des Abgaswärmerückgewinnungssystems abgekühlt.

Aus der DE 41 273 95 A1 ist eine Dampfturbine bekannt, bei welcher zum frühzeitigen Erkennen und Orten einer Veränderung an einem Bauteil der Turbine, insbesondere an einer Turbinenschaufel, eine Abweichung eines während des Betriebs der Turbine ermittelten Messwertes vom Normwert ein von dem Bauteil erzeugtes Schallspektrum im Inneren der Turbine erfasst und mit einem Bezugsspektrum verglichen wird. Zur Erhöhung der Intensität der Signale im Schallspektrum werden die Bauteile der Turbine, vorzugsweise die Laufschaufeln von außen zur Schallemission angeregt. Die Dampfturbine umfasst zwecks Erkennung und Ortung von Veränderungen eine von außen in das Innere der Turbine einführbare Sonde zur Schallerfassung.

Aus der DE 10 2015 016 759 A1 ist ein Verfahren zur Überwachung einer Vorrichtung zur Abwärmenutzung in einem Kraftfahrzeug bekannt, wobei zur Ermittlung eines Verschleißes oder Defektes einer in einen Arbeitskreislauf der Vorrichtung eingebundenen Expansionsmaschine vorgesehen ist, dass bei einem Systemstart der Vorrichtung ein der Expansionsmaschine im Normalbetrieb des Arbeitskreislaufs nachgeschalteter elektrischer Generator mittels eines Umrichters als Antriebseinheit für die Expansionsmaschine derart betrieben wird, dass die Expansionsmaschine mit einer Solldrehzahl bewegt wird.

Aus der DE 10 2015 201 203 A1 ist ein Verfahren zur Detektion von Kavitation beim Betrieb einer hydraulischen Maschine, welches wenigstens ein Laufrad aufweist, bekannt, wobei mit Hilfe von wenigsten einem Körperschallsensor, wobei ein ermittelter Ist-Wert mit einem bekannten Referenzwert für eine intakte hydraulische Arbeitsmaschine verglichen wird und anhand der Abweichung auf einen Verschleiß oder Defekt der hydraulischen Maschine geschlossen wird.

Die KR 2012/0013547 A offenbart ein Abgaswärmerückgewinnungssystem für einen Verbrennungsmotor mit einer Expansionskraftmaschine zur Umwandlung der aus dem Abgasstrom des Verbrennungsmotors zurückgewonnenen Energie in mechanische oder elektrische Energie, wobei ein Überwachungssystem vorgesehen ist, um eine Beschädigung der Expansionskraftmaschine zu erkennen.

Aus der EP 1 049 863 A1 ist ein Dampfkreislauf mit geschlossenem Kreislauf bekannt, der eine Vorrichtung zur Wärmeübertragung und einen Dampfexpander umfasst, wobei die Abwärme aus konventionellen Energiesystemen genutzt wird, um diese in zusätzliche thermodynamische Arbeit umzuwandeln, wodurch der Gesamtwirkungsgrad des Energiesystems verbessert wird. Überhitzter Dampf wird im Inneren der Energieübertragungseinrichtung erzeugt, wo die Abwärme in Fluidenergie mit den gewünschten thermodynamischen Eigenschaften umgewandelt wird. Der überhitzte Dampf wird dann durch arbeitserzeugende Einheiten in mechanische Energie umgewandelt, wodurch ein wesentlicher Teil der in der Abwärme enthaltenen Energie in das Energiesystem zurückgeführt wird.

Die DE 10 2016 107 458 A1 offenbart ein Fahrzeug-Leistungserzeugungssystem mit einer Lichtmaschine und eine Energieumwandlungsvorrichtung, die elektrische Leistung zu einem elektrischen System eines Fahrzeugs liefert. Ein Regler kann die Lichtmaschine auf der Basis eines Spannungspegels des elektrischen Systems steuern. Ein Steuermodul kann die Energieumwandlungsvorrichtung auf der Basis einer Betriebsanzeige der Lichtmaschine so steuern, dass das Steuermodul einen Feldspulenstrom der Energieumwandlungsvorrichtung auf der Basis der Betriebsanzeige der Lichtmaschine einstellt.

US 2005/0229595 A1 beschreibt einen thermodynamischen Motor, welcher den überhitzten Dampf eines Arbeitsmediums in kinetische Energie mit Hilfe einer Dekompressionseinrichtung umwandelt. Die Maschine enthält einen Niedertemperaturkreislauf, in dem ein erstes Arbeitsmedium durch einen ersten Wärmetauscher und anschließend durch die Dekompressionseinrichtung transportiert wird, und einen Hochtemperaturkreislauf, in dem ein zweites Arbeitsmedium durch einen zweiten Wärmetauscher und anschließend durch die Dekompressionseinrichtung transportiert wird. Der erste Wärmetauscher und der zweite Wärmetauscher befinden sich im Abgassystem eines Verbrennungsmotors.

Aus der DE 10 2012 204 086 A1 ist eine Diagnosevorrichtung für Kfz-Werkstatt-Tester zur Erkennung von zu Störgeräuschen führenden Fehlern in mechanischen Komponenten eines Kraftfahrzeuges bekannt. Die Diagnosevorrichtung weist einen fahrzeugexternen Messsignal-Adapter zur Erfassung des Rohsignals eines Körperschallsensors, vorzugsweise Klopfsensors, in einem Kraftfahrzeug, ein Auswertemodul, das das Rohsignal des Körperschallsensors erfasst und in einem vorgegebenen Frequenzbereich dahingehend überprüft, ob die Amplitude des Rohsignals einen vorgegebenen Schwellwert überschreitet, und ein graphisches Ausgabemodul, das abhängig vom Überschreiten des vorgegebenen Schwellwertes eine optische Anzeige zumindest der zu tauschenden fehlerhaften Komponenten aktiviert, auf.

Die DE 10 2017 200 964 A1 beschreibt eine Messvorrichtung zur Erfassung von Mischreibungsereignissen und/oder Stick-Slip-Ereignissen an und/oder in einem rotatorisch beweglichen Bauteil, wobei mindestens ein Sensorelement zur Detektion von Bewegungen im Material des Bauteils, insbesondere Verformungen und/oder Schwingungen an und/oder im Bauteil mit einer Datenverarbeitungsvorrichtung gekoppelt ist und die Datenverarbeitungsvorrichtung ein Rechenmittel zur Auswertung der Frequenzen der Bewegungen, der Amplituden der Bewegungen, der Änderungen der Frequenzen und/oder der Änderungen der Amplituden aufweist.

Aus der DE 10 2010 052 508 A1 ist ein einen Axialkolbenexpander für eine Abwärmenutzungsvorrichtung eines Kraftfahrzeuges mit einer Abtriebswelle, die um eine Rotationsachse drehbar gelagert ist und an der mechanische Antriebsleistung abgreifbar ist, bekannt. Der Axialkolbenexpander weist mehreren Zylindern, die parallel zur Rotationsachse orientiert sind und in Umfangsrichtung verteilt um die Rotationsachse angeordnet sind, mehreren Kolben, die jeweils in einem der Zylinder parallel zur Rotationsachse hubverstellbar angeordnet sind, eine Kopplungsscheibe, die mit allen Kolben und mit der Abtriebswelle antriebsverbunden ist, einen Hochdruckeinlass, der fluidisch mit den Zylindern verbunden ist, einen Niederdruckauslass, der fluidisch mit den Zylindern verbunden ist, sowie eine Ventileinrichtung zum Steuern der fluidischen Verbindungen zwischen den Zylindern und dem Hochdruckeinlass sowie dem Niederdruckauslass auf.

Der Erfindung liegt nun die Aufgabe zugrunde, bei einem Abgasrückgewinnungssystem eines Verbrennungsmotors eine Beschädigung der Expansionskraftmaschine zu erkennen, um größere Beschädigungen auszuschließen.

Erfindungsgemäß wird diese Aufgabe durch ein Abgaswärmerückgewinnungssystem für einen Verbrennungsmotor, mit einer Pumpe zum Fördern eines Betriebsfluids, einem Verdampfer zur Überführung des Betriebsfluids vom flüssigen Aggregatzustand in den gasförmigen Aggregatzustand, einem Kondensator zur Verflüssigung des Betriebsfluids, sowie mit einer Expansionskraftmaschine, welche von dem gasförmigen Betriebsfluid durchströmt wird, gelöst. Es ist vorgesehen, dass an der Expansionskraftmaschine ein Sensor angeordnet ist, mit welchem eine Funktion der Expansionskraftmaschine überwachbar ist. Durch einen solchen Sensor können Beschädigungen oder ein erhöhter Verschleiß an der Expansionskraftmaschine rechtzeitig erkannt werden und das Abgaswärmerückgewinnungssystem abgeschaltet werden, bevor gravierende Schäden an der Expansionskraftmaschine oder weiteren Systemkomponenten des Abgaswärmerückgewinnungssystems auftreten. Zudem kann auf einfache und kostengünstige Weise eine On-Board-Diagnose des Abgaswärmerückgewinnungssystems durchgeführt werden

Durch die in den abhängigen Ansprüchen aufgeführten Merkmale sind vorteilhafte Verbesserungen und nicht-triviale Weiterentwicklungen des im unabhängigen Anspruch aufgeführten Abgaswärmerückgewinnungssystems möglich.

Erfindungsgemäß ist vorgesehen, dass der Sensor als piezoresistiver Bewegungssensor ausgeführt ist. Durch einen piezoresistiven Bewegungssensor können Abweichungen in der Bewegung der beweglichen Komponenten der Expansionskraftmaschine erkannt werden. Dabei sind piezoresistive Bewegungssensoren klein, kompakt und leicht.

In einer nicht zur Erfindung gehörenden alternativen Ausgestaltung ist der Sensor als Körperschallsensor ausgeführt. Ein unzulässiger Verschleiß oder eine Beschädigung einer beweglichen Komponente der Expansionskraftmaschine führt in der Regel zu Geräuschbildung, beispielsweise durch Unwuchten an den beweglichen Komponenten. Diese Geräusche werden mittels Körperschall auf das Gehäuse des Expansionskraftmaschine übertragen. Die Geräusche können einfach und kostengünstig durch ein Körperschallsensor erfasst und erkannt werden, sodass eine On-Board-Diagnose mittels eines Körperschallsensors ebenfalls einfach und kostengünstig umgesetzt werden kann.

Erfindungsgemäß ist vorgesehen, dass der Sensor an einem Gehäuse der Expansionskraftmaschine angeordnet ist. Da die Schwingungen der beweglichen Komponenten der Expansionskraftmaschine mittels Körperschall auf das Gehäuse übertragen und von diesem abgestrahlt werden, kann eine Diagnose durch einen Sensor am Gehäuse erfolgen. Dabei kann eine leicht zugängliche Position gewählt werden. Somit kann die Montage des Sensors vereinfacht werden und die Gefahr eliminiert werden, dass die beweglichen Komponenten mit der Verkabelung des Sensors in Kontakt kommen und diese beschädigen.

Erfindungsgemäß ist vorgesehen, dass die Expansionskraftmaschine als Axialkolbenexpander ausgeführt ist. Ein Axialkolbenexpander ist eine bevorzugte Arbeitsmaschine, um das dampfförmige Betriebsfluid des Abgaswärmerückgewinnungssystems zu entspannen und die Energie auf einen Abtrieb zu übertragen. Diese Energie kann dann als mechanische Energie entweder unmittelbar zum Antrieb des Verbrennungsmotors oder eines Nebenaggregats genutzt werden oder mittels eines Generators in elektrischen Strom gewandelt werden. Dieser Strom kann ebenfalls unmittelbar zum Antrieb eines Nebenaggregats genutzt werden oder in einer Batterie zwischengespeichert werden.

Erfindungsgemäß steht das Lot der Auflagefläche des Sensors im rechten Winkel zur Bewegungsrichtung des Kolbens des Axialkolbenexpanders. Dabei ist ein besonders geringes Referenzsignal notwendig, wodurch die Messung eine geringe Störanfälligkeit aufweist. Dadurch ist eine qualitativ hochwertige und einfach reproduzierbare Messung des Signals möglich.

In einer nicht zur Erfindung gehörenden alternativen Ausgestaltung ist vorgesehen, dass die Expansionskraftmaschine als Scroll-Expander ausgeführt ist. Ein Scrollexpander ist eine weitere einfache Arbeitsmaschine, mit welcher das dampfförmige Betriebsfluid des Abgaswärmerückgewinnungssystem entspannt werden kann und die Energie nutzbar gemacht werden kann.

Besonders bevorzugt ist dabei, wenn der Sensor konzentrisch zu einer Mittelachse des ScrollExpanders angeordnet ist. Durch eine Anordnung konzentrisch zur Mittelachse können Störgeräusche und Schwingungen im Wesentlichen ausgeblendet werden, wodurch die Qualität der Messung und die Wiederholbarkeit verbessert werden können.

Erfindungsgemäß wird eine Abgasanlage für einen Verbrennungsmotor mit einem Abgasturbolader und mindestens einem Katalysator sowie mit einem erfindungsgemäßen Abgaswärmerückgewinnungssystem vorgeschlagen. Durch eine erfindungsgemäße Abgasanlage kann zumindest eine ansonsten ungenutzte Abwärme des Abgases in mechanische und/oder elektrisch Energie umgewandelt und dem Verbrennungsmotor, einem Nebenaggregat, dem Antriebsstrang eines Kraftfahrzeuges oder einem sonstigen Verbraucher zugeführt werden. Dabei können Beschädigungen oder ein unzulässig hoher Verschleiß an der Expansionskraftmaschine rechtzeitig erkannt werden, bevor gravierende Schäden an dem Abgaswärmerückgewinnungssystem auftreten. Zudem kann der ordnungsgemäße Betrieb im Rahmen einer On-Board-Diagnose überwacht werden.

In einer vorteilhaften Ausführungsform der Abgasanlage ist vorgesehen, dass der Verdampfer in einen Wärmetauscher integriert ist, welcher von dem Abgas des Verbrennungsmotors durchströmbar ist. Durch die Abgasenergie kann das Betriebsfluid des Abgaswärmerückgewinnungssystems auf einfache Art und Weise und ohne zusätzlichen Energieaufwand verdampft werden.

In einer bevorzugten Ausführungsform der Abgasanlage ist vorgesehen, dass die Abgasanlage einen ersten Katalysator und einen zweiten Katalysator umfasst, wobei der Wärmetauscher in Strömungsrichtung eines Abgasstroms des Verbrennungsmotors stromabwärts der beiden Katalysatoren angeordnet ist. Dadurch können die Abgasnachbehandlungskomponenten, insbesondere die Katalysatoren nach einem Kaltstart des Verbrennungsmotors schnell auf ihre Betriebstemperatur aufgeheizt werden, um die Emissionen des Verbrennungsmotors zu minimieren. Erst nachdem die Abgasanlage durchwärmt ist, und die Abwärmeverluste steigen, kann diese Abwärme dann zielgerichtet durch das Abgaswärmerückgewinnungssystem genutzt werden. Dies ist insbesondere bei längerem Betrieb des Verbrennungsmotors mit mittlerer bis hoher Leistung, beispielsweise bei längeren Autobahnfahrten oder Fahrten im Gebirge der Fall.

Erfindungsgemäß wird ein Verfahren zur Diagnose eines erfindungsgemäßen Abgaswärmerückgewinnungssystems vorgeschlagen, wobei die Signalstärke des Sensors über mindestens eine Umdrehung der Expansionskraftmaschine ermittelt wird und mit einer maximal zulässigen Signalstärke verglichen wird, und wobei die Expansionskraftmaschine abgeschaltet oder abgekoppelt wird, wenn die Signalstärke die maximal zulässige Signalstärke überschreitet. Dadurch kann auf einfache Art und Weise die Funktion des Abgaswärmerückgewinnungssystems, insbesondere der Expansionskraftmaschine überwacht werden. Zudem können Maßnahmen zum Bauteilschutz des Abgaswärmerückgewinnungssystems eingeleitet werden und insbesondere die Expansionskraftmaschine abgekoppelt oder ausgeschaltet werden, wenn eine Beschädigung oder ein unzulässig hoher Verschleiß erkannt wird.

In einer vorteilhaften Weiterentwicklung des Verfahrens ist vorgesehen, dass die Signalstärke über mindestens zehn Umdrehungen, bevorzugt um mindestens 25 Umdrehungen, besonders bevorzugt um mindestens 40 Umdrehungen gemittelt wird und der Mittelwert mit der maximal zulässigen Signalstärke vergleichen wird. Durch die Mittelwertbildung über mindestens zehn Umdrehungen können zufällige Messfehler ausgeglichen werden, sodass eine unerwünschte Abschaltung des Abgaswärmerückgewinnungssystems bei intakter Expansionskraftmaschine vermieden wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: ein Ausführungsbeispiel eines Verbrennungsmotors mit einer erfindungsgemäßen Abgasanlage, welche ein Abgaswärmerückgewinnungssystem aufweist;
- Figur 2: ein Ausführungsbeispiel für eine Expansionskraftmaschine in einem Abgaswärmerückgewinnungssystem mit einem Sensor zur Funktionsüberwachung;
- Figur 3: ein weiteres Ausführungsbeispiel für eine Expansionskraftmaschine in einem Abgaswärmerückgewinnungssystem mit einem Sensor zur Funktionsüberwachung der Expansionskraftmaschine; und
- Figur 4: ein Ablaufdiagramm zur Durchführung eines erfindungsgemäßen Verfahrens zur Diagnose eines Abgaswärmerückgewinnungssystems.

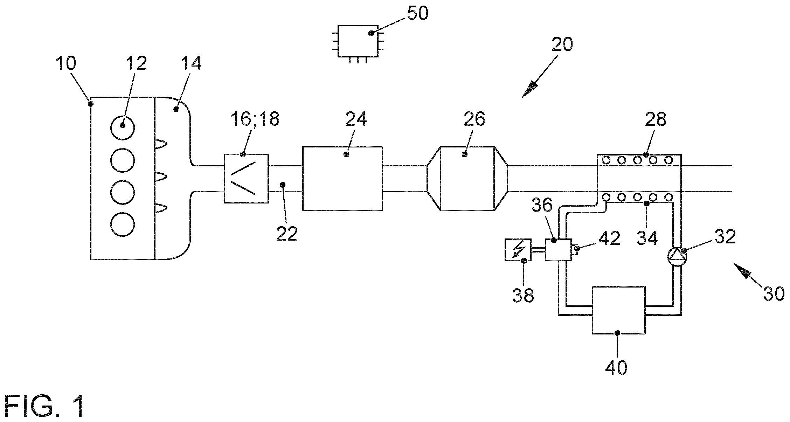

Figur 1 zeigt einen Verbrennungsmotor 10 mit mindestens einem Brennraum 12, welcher zum Antrieb eines Kraftfahrzeuges vorgesehen ist. In Figur 1 ist der Verbrennungsmotor 10 als Vierzylinder-Reihenmotor ausgeführt. Alternativ sind jedoch auch andere Ausführungsformen, vorzugsweise mit zwei bis zwölf Zylindern, möglich. Der Verbrennungsmotor 10 kann alternativ auch als V-Motor oder Boxermotor ausgeführt werden. Der Verbrennungsmotor 10 weist einen Kühlmittelkreislauf auf, über welchen der Motorblock des Verbrennungsmotors 10 gekühlt wird, um die Abwärme des Verbrennungsmotors 10 abzuführen. Der Verbrennungsmotor 10 ist mit seinem Auslass 14 mit einer Abgasanlage 20 verbunden. Die Abgasanlage 20 umfasst einen Abgaskanal 22, in welchem in Strömungsrichtung eines Abgases des Verbrennungsmotors 10 durch den Abgaskanal 22 eine Turbine 18 eines Abgasturboladers 16 und stromabwärts der Turbine 18 des Abgasturboladers 16 mehrere Abgasnachbehandlungskomponenten 24, 26 sowie ein Wärmetauscher 28 angeordnet sind. In einer bevorzugten Ausführungsform ist der Verbrennungsmotor 10 als selbstzündender Dieselmotor ausgeführt und die Abgasnachbehandlungskomponenten 24, 26 umfassen einen Oxidationskatalysator, einen NOx-Speicherkatalysator, einen Partikelfilter und/oder einen Katalysator zur selektiven katalytischen Reduktion von Stickoxiden.

Alternativ kann der Verbrennungsmotor 10 als Ottomotor ausgeführt sein, wobei in der Abgasanlage ein erster Katalysator 24 und stromabwärts des ersten Katalysators 24 ein zweiter Katalysator angeordnet sind. Dabei ist einer der Katalysatoren 24, 26 vorzugsweise als Drei-Wege-Katalysator und der andere Katalysator 24, 26 als weitere Drei-Wege-Katalysator oder als Vier-Wege-Katalysator ausgeführt. Die Abgasnachbehandlungskomponenten 24, 26 und der Wärmetauscher 28 können auch als Abgaswärmerückgewinnungsbaugruppe in einem gemeinsamen Gehäuse angeordnet werden, um die Montage der Abgasanlage 20 zu vereinfachen.

Das Abgaswärmerückgewinnungssystem 30 umfasst neben dem Wärmetauscher 28, welcher auch als Verdampfer 34 für ein Betriebsfluid des Abgaswärmrückgewinnungssystems 30 dient, eine Expansionskraftmaschine 36, einen Kondensator 40 und eine Pumpe 32, die zum Fördern des Betriebsfluids dient. Das Abgaswärmerückgewinnungssystem 30 umfasst ferner einen Vorratsbehälter für das Betriebsfluid, insbesondere ein organisches Arbeitsmedium, bevorzugt Alkohol oder ein Alkohol-Wasser-Gemisch, besonders bevorzugt Ethanol oder ein Ethanol-Wasser-Gemisch. Der Vorratsbehälter ist über eine Leistung mit der Pumpe 32 verbunden, in welcher das Betriebsfluid verdichtet wird. Das verdichtete Betriebsfluid wird dem Verdampfer 34 zugeführt, wo es durch die Abwärme des Abgasstroms des Verbrennungsmotors 10 in den gasförmigen Aggregatzustand überführt wird. Das gasförmige Betriebsfluid wird der Expansionskraftmaschine 36 zugeführt, wobei die Expansionskraftmaschine dem Betriebsfluid Energie entzieht. Dabei steht die Expansionskraftmaschine 36 mit einem Generator 38 in Wirkverbindung, welcher die Bewegungsenergie der Expansionskraftmaschine in elektrischen Strom umwandelt. Alternativ oder zusätzlich kann die Expansionskraftmaschine 36 auch mechanisch mit dem Verbrennungsmotor 10 verbunden werden und die Energie in den Antriebsstrang einspeisen. Der Generator 38 kann mit einem elektrischen Bordnetz eines Kraftfahrzeuges verbunden sein und/oder die elektrische Energie in einer Batterie zwischenspeichern.

Stromabwärts der Expansionskraftmaschine 36 ist in dem Abgaswärmerückgewinnungssystem 30 ein Kondensator 40 angeordnet, welcher einen Kühlmittelzulauf und einen Kühlmittelrücklauf aufweist und an den Kühlwasserkreislauf des Verbrennungsmotors 10 angeschlossen ist. In dem Kondensator 40 wird das Betriebsfluid des Abgaswärmerückgewinnungssystems 30 wieder in den flüssigen Aggregatzustand überführt, bevor es über eine Rücklaufleitung wieder der Pumpe 32 zugeführt wird.

An der Expansionskraftmaschine 36 ist ein Sensor 42 angeordnet, mit welchem die Funktion der Expansionskraftmaschine 36 überwacht wird. Dabei können im Rahmen einer On-Board Diagnose bereits geringe Schäden erkannt werden, bevor diese Schäden zunehmen und eine Beschädigung des kompletten Abgaswärmerückgewinnungssystems 30 droht. Ferner kann der Verschleiß an der Expansionskraftmaschine 36 überwacht werden.

Der Verbrennungsmotor 10 und das Abgaswärmerückgewinnungssystem 30, insbesondere der Sensor 42 sind mit einem Steuergerät 50 des Verbrennungsmotor 10 verbunden.

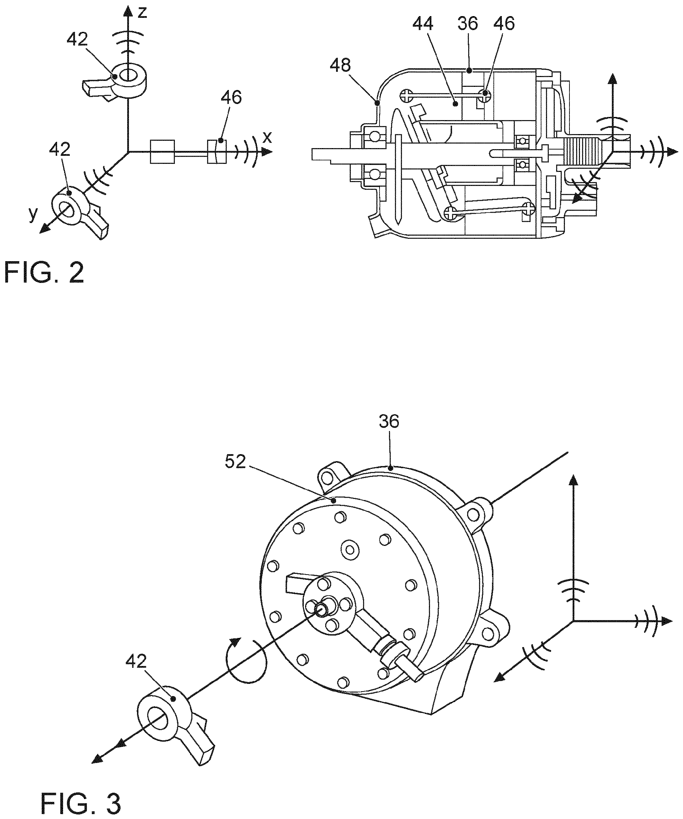

In Figur 2 ist ein bevorzugtes Ausführungsbeispiel einer solchen Expansionskraftmaschine 36 mit einem Sensor 42 dargestellt. Der Sensor 42 ist vorzugsweise als piezoresistiver Beschleunigungssensor ausgeführt und auf eine Gehäuse 48 der Expansionskraftmaschine 36 montiert. In Figur 2 ist die Expansionskraftmaschine 36 als Axialkolbenexpander 44 ausgeführt. Der Axialkolbenexpander 44 weist mindestens einen Kolben 46, vorzugsweise mehrere Kolben 46 auf, welche in dem Gehäuse 48 verschiebbar gelagert sind. Dabei ist der Sensor 42 vorzugsweise so montiert, dass das Lot der Auflagefläche des Sensors 42 im rechten Winkel zur Bewegungsrichtung des Kolbens 46 steht.

In Figur 3 ist ein alternatives, nicht zur Erfindung gehörendes Ausführungsbeispiel einer Expansionskraftmaschine 36 dargestellt. Dabei ist die Expansionskraftmaschine 36 als Scrollexpander 52 ausgeführt. In diesem Ausführungsbeispiel ist der Sensor 42 konzentrisch zur Drehachse des Scrollexpanders 52 angeordnet.

Ein Vorteil der beschriebenen Montagepositionen liegt darin, dass ein relativ geringes Referenzsignal im Vergleich zur Montageposition in Bewegungsrichtung des Kolbens 46 für den nicht auffälligen Bauteilzustand der Expansionskraftmaschine 36 notwendig ist.

Eine mögliche Diagnosegröße ist die Signalstärke des verwendeten piezoresistiven Beschleunigungssensors 42. Zur Ermittlung dieser Größe wird beispielsweise unter stationären Randbedingungen über eine bestimmte Anzahl an Umdrehungen, vorzugsweise über mindestens zehn Umdrehungen, bevorzugt über mindestens 25 Umdrehungen, besonders bevorzugt über mindesten 40 Umdrehungen die gemittelte Signalstärke erfasst. Anschließend wird die so ermittelte Signalstärke mit einer maximal zulässigen Signalstärke verglichen. Bei einer Überschreitung dieser maximal zulässigen Signalstärke wird der Betrieb des Abgaswärmerückgewinnungssystems 30 gestoppt. Ein übermäßiger Verschleiß der Expansionskraftmaschine 36 sowie die Beeinträchtigung der Funktionsfähigkeit anderer Systemkomponenten des Abgaswärmerückgewinnungssystems 30 kann dadurch vermieden werden.

Eine weitere mögliche Diagnosegröße zur Schadens- oder Verschleißvorhersage ist de Bewertung der Varianz der Signalstärke unter stationären Randbedingungen. Die so ermittelte aktuelle Varianz wird ebenfalls mit einem Referenzwert verglichen. Dieser Vergleich kann ebenfalls als Abschaltkriterium für das Abgaswärmerückgewinnungssystem 30 genutzt werden.

Ein alternativer Messaufbau besteht aus zwei Bewegungssensoren oder Körperschallsensoren mit zueinander um 90° versetzten Montageflächen. Dabei kann im Falle eines Axialkolbenexpanders 44 bei einer Montagefläche das Lot parallel zur Bewegungsrichtung des Kolbens 46 verlaufen.

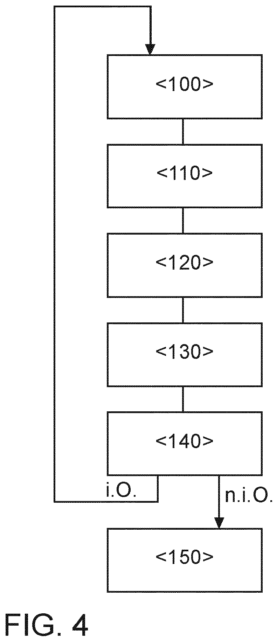

In Figur 4 ist ein erfindungsgemäßes Verfahren zur Diagnose eines Abgaswärmerückgewinnungssystems 30, insbesondere einer Expansionskraftmaschine 36 eines solchen Abgaswärmerückgewinnungssystems 30 dargestellt. In einem ersten Verfahrensschritt <100> wird das Betriebsfluid des Abgaswärmerückgewinnungssystems 30 durch die Pumpe 32 verdichtet. In einem Verfahrensschritt <110> wird das verdichtete Betriebsfluid dem Verdampfer 34 zugeführt und in den gasförmigen Aggregatzustand überführt. In einem Verfahrensschritt <120> wird das gasförmige Betriebsfluid der Expansionskraftmaschine 36 zugeführt und in dieser entspannt. Dabei überträgt die Expansionskraftmaschine 36 in einem Verfahrensschritt Leistung auf einen Generator 38, wo diese Leistung in elektrischen Strom umgewandelt und/oder in einer Batterie zwischengespeichert werden kann. In einem Verfahrensschritt <130> wird das Betriebsfluid kondensiert und wieder der Pumpe 32 zugeführt. In einem Verfahrensschritt <140> wird das Signal des Sensors 42 ausgewertet und mit einem maximal zulässigen Signal verglichen. Ist das Signal kleiner, so wird das Verfahren wieder mit Schritt <100> weitergeführt. Ist das Signal unzulässig groß, so wird auf eine Beschädigung oder einen unzulässig hohen Verschleiß der Expansionskraftmaschine 36 geschlossen und das Verfahren in einem Verfahrensschritt <150> beendet.

### Bezugszeichenliste

- 10: Verbrennungsmotor
- 12: Brennraum
- 14: Auslass
- 16: Abgasturbolader
- 18: Turbine

- 20: Abgasanlage
- 22: Abgaskanal
- 24: erster Katalysator
- 26: zweiter Katalysator
- 28: Wärmetauscher

- 30: Abgaswärmerückgewinnungssystem
- 32: Pumpe
- 34: Verdampfer
- 36: Expansionskraftmaschine
- 38: Generator

- 40: Kondensator
- 42: Sensor
- 44: Axialkolbenexpander
- 46: Kolben
- 48: Gehäuse

- 50: Steuergerät
- 52: Scrollexpander

## Patentansprüche

1. Abgaswärmerückgewinnungssystem (30) für einen Verbrennungsmotor (10), mit einer Pumpe (32) zum Fördern eines Betriebsfluids, einem Verdampfer (34) zur Überführung des Betriebsfluids vom flüssigen Aggregatzustand in den gasförmigen Aggregatzustand, einem Kondensator (40) zur Verflüssigung des Betriebsfluids, sowie mit einer Expansionskraftmaschine (36), welche von dem gasförmigen Betriebsfluid durchströmt wird, wobei an einem Gehäuse der Expansionskraftmaschine (36) ein Sensor (42) angeordnet ist, mit welchem eine Funktion der Expansionskraftmaschine (36) überwachbar ist, **dadurch gekennzeichnet, dass** der Sensor als piezoresistiver Bewegungssensor ausgeführt ist und die Expansionskraftmaschine (36) als Axialkolbenexpander (44) ausgeführt ist, wobei das Lot der Auflagefläche des Sensors (42) im rechten Winkel zur Bewegungsrichtung des Kolbens (46) des Axialkolbenexpanders (44) steht.

2. Abgasanlage (20) für einen Verbrennungsmotor (10) mit einem Abgasturbolader (16, 18) und mindestens einem Katalysator (24, 26) sowie mit einem Abgaswärmerückgewinnungssystem (30) nach Anspruch 1.

3. Abgasanlage (20) für einen Verbrennungsmotor (10) nach Anspruch 2, **dadurch gekennzeichnet, dass** der Verdampfer (34) in einen Wärmetauscher (28) integriert ist, welcher von dem Abgas des Verbrennungsmotors (10) durchströmbar ist.

4. Abgasanlage (20) für einen Verbrennungsmotor (10) nach Anspruch 3, **dadurch gekennzeichnet, dass** die Abgasanlage (20) einen ersten Katalysator (24) und einen zweiten Katalysator (26) umfasst, wobei der Wärmetauscher (28) in Strömungsrichtung eines Abgasstroms des Verbrennungsmotors (10) stromabwärts der beiden Katalysatoren (24, 26) angeordnet ist.

5. Verfahren zur Diagnose eines Abgaswärmerückgewinnungssystems (30) nach Anspruch 1, **dadurch gekennzeichnet, dass** die Signalstärke des Sensors (42) über mindestens eine Umdrehung der Expansionskraftmaschine (36) ermittelt wird und mit einer maximal zulässigen Signalstärke verglichen wird, wobei die Expansionskraftmaschine (36) abgeschaltet oder abgekoppelt wird, wenn die Signalstärke die maximal zulässige Signalstärke überschreitet.

6. Verfahren zur Diagnose eines Abgaswärmerückgewinnungssystems (30) nach Anspruch 5, **dadurch gekennzeichnet, dass** die Signalstärke über mindestens 10 Umdrehungen gemittelt wird und der Mittelwert mit der maximal zulässigen Signalstärke verglichen wird.

## Claims

1. Exhaust-gas-heat-recovery system (30) for an internal combustion engine (10), having a pump (32) for conveying an operating fluid, having an evaporator (34) for converting the operating fluid from the liquid state of matter into the gaseous state of matter, having a condenser (40) for liquefying the operating fluid, and having an expansion engine (36) through which the gaseous operating fluid flows, wherein, on a housing of the expansion engine (36), there is arranged a sensor (42) by way of which a function of the expansion engine (36) is able to be monitored, **characterized in that** the sensor is designed as a piezoresistive motion sensor and the expansion engine (36) is designed as an axial piston expander (44), wherein the perpendicular to the bearing surface of the sensor (42) is at a right angle to the direction of movement of the piston (46) of the axial piston expander (44).

2. Exhaust-gas system (20) for an internal combustion engine (10), having an exhaust-gas turbocharger (16, 18) and at least one catalytic converter (24, 26), and having an exhaust-gas-heat-recovery system (30) according to Claim 1.

3. Exhaust-gas system (20) for an internal combustion engine (10) according to Claim 2, **characterized in that** the evaporator (34) is integrated into a heat exchanger (28) through which the exhaust gas of the internal combustion engine (10) is able to flow.

4. Exhaust-gas system (20) for an internal combustion engine (10) according to Claim 3, **characterized in that** the exhaust-gas system (20) comprises a first catalytic converter (24) and a second catalytic converter (26), wherein the heat exchanger (28) is arranged downstream of the two catalytic converters (24, 26) in the flow direction of an exhaust-gas stream of the internal combustion engine (10).

5. Method for diagnosis of an exhaust-gas-heat-recovery system (30) according to Claim 1, **characterized in that** the signal strength of the sensor (42) is ascertained over at least one revolution of the expansion engine (36) and is compared with a maximum permissible signal strength, wherein the expansion engine (36) is switched off or decoupled if the signal strength exceeds the maximum permissible signal strength.

6. Method for diagnosis of an exhaust-gas-heat-recovery system (30) according to Claim 5, **characterized in that** the signal strength is averaged over at least ten revolutions and the average value is compared with the maximum permissible signal strength.

## Revendications

1. Système de récupération de la chaleur de gaz d'échappement (30) pour un moteur à combustion interne (10), avec une pompe (32) pour le transport d'un fluide de fonctionnement, un évaporateur (34) pour le transfert du fluide de fonctionnement de l'état physique liquide à l'état physique gazeux, un condenseur (40) pour la liquéfaction du fluide de fonctionnement, ainsi qu'avec un moteur à expansion (36) traversé par le fluide de fonctionnement gazeux, un capteur (42) étant agencé sur un boîtier du moteur à expansion (36), avec lequel une fonction du moteur à expansion (36) peut être surveillée, **caractérisé en ce que** le capteur est conçu sous forme de capteur de mouvement piézorésistif et le moteur à expansion (36) est conçu sous forme d'expanseur à piston axial (44), la perpendiculaire à la surface d'appui du capteur (42) étant située à angle droit par rapport à la direction de mouvement du piston (46) de l'expanseur à piston axial (44).

2. Système d'échappement (20) pour un moteur à combustion interne (10) avec un turbocompresseur à gaz d'échappement (16, 18) et au moins un catalyseur (24, 26) ainsi qu'avec un système de récupération de la chaleur de gaz d'échappement (30) selon la revendication 1.

3. Système d'échappement (20) pour un moteur à combustion interne (10) selon la revendication 2, **caractérisé en ce que** l'évaporateur (34) est intégré dans un échangeur de chaleur (28) qui peut être traversé par le gaz d'échappement du moteur à combustion interne (10).

4. Système d'échappement (20) pour un moteur à combustion interne (10) selon la revendication 3, **caractérisé en ce que** le système d'échappement (20) comprend un premier catalyseur (24) et un deuxième catalyseur (26), l'échangeur de chaleur (28) étant agencé en aval des deux catalyseurs (24, 26) dans la direction d'écoulement d'un courant de gaz d'échappement du moteur à combustion interne (10).

5. Procédé de diagnostic d'un système de récupération de la chaleur de gaz d'échappement (30) selon la revendication 1, **caractérisé en ce que** l'intensité de signal du capteur (42) est déterminée sur au moins un tour du moteur à expansion (36) et est comparée à une intensité de signal maximale autorisée, le moteur à expansion (36) étant arrêté ou découplé lorsque l'intensité de signal dépasse l'intensité de signal maximale autorisée.

6. Procédé de diagnostic d'un système de récupération de la chaleur de gaz d'échappement (30) selon la revendication 5, **caractérisé en ce que** l'intensité de signal est moyennée sur au moins 10 tours et la valeur moyenne est comparée à l'intensité de signal maximale autorisée.
